# EUROPEAN PATENT SPECIFICATION

(11) **EP 3 089 496 B1**
(45) Date of publication and mention of the grant of the patent: **01.07.2020**
(21) Application number: 15201153.2
(22) Date of filing: 18.12.2015
(51) Int. Cl.: H04W 92/02, H04W 12/06, H04W 12/08, H04W 84/12

(54) **METHOD AND APPARATUS FOR PROVIDING INFORMATION**
VERFAHREN UND VORRICHTUNG ZUR BEREITSTELLUNG VON INFORMATIONEN
PROCÉDÉ ET APPAREIL PERMETTANT DE FOURNIR DES INFORMATIONS

(30) Priority: 27.04.2015 CN 201510204795
(43) Date of publication of application: 02.11.2016
(73) Proprietor: Xiaomi Inc., Beijing 100085 (CN)
(72) Inventor: HOU, Enxing, Beijing 100085 (CN); MENG, Deguo, Beijing 100085 (CN); GAO, Ziguang, Beijing 100085 (CN)
(74) Representative: Cabinet Beau de Loménie

(56) References cited:
- WO-A1-2009/146741
- US-A1- 2008 159 536
- US-A1- 2011 252 237

## Description

### TECHNICAL FIELD

The present disclosure relates to the field of wireless network technology and, more particularly, to a method and an apparatus for providing information.

### BACKGROUND

A router being widely used as a gateway device provides a wireless network access service for an access device, such as a mobile phone, a tablet and a smart household device.

Only after acquiring access authentication information of a router, the access device may establish a wireless network connection with the router by using the access authentication information as a certificate. The access authentication information includes a SSID (Service Set Identifier) and a password of the router.

When the access authentication information of the router is modified, a user needs to manually provide the modified access authentication information to the access device, which results in the process of acquiring the modified access device authentication information by the access device more complex and inefficient.

WO 2009/146741 discloses network discovery comprising discovering networks being available for a device and automatically providing communication settings for at least one of discovered networks to the device. The network discovery may be device-initiated or network-initiated. The communication settings provision may be effected by network discovery functionality or another functionality such as device management functionality.

US 2011/252237 discloses the authorization of remote access points for use in a network. A remote access point contains identity information established during manufacturing; this identity information may be in the nature of a digital certificate which can be used to establish a secure connection between networked entities. After the remote access point is provisioned to communicate securely to a controller using its TCP/IP address provided by a user, the remote access point is put into an un-authorized state by the controller pending further authorization. The user is presented with a secure captive portal page authenticating the end-user. This authorization may be through entering a user name and password, through presenting a certificate, through two-factor methods, or other methods known to the art. User's authentication credentials are verified by the controller. Optionally this verification can be performed using a per-user certificate. After the remote access point has been authorized, the controller marks it verified as a fully functional node, and saves this state. The user performing the authorization is associated with the remote access point, and may be used to monitor the usage and potentially revoke the authorization. The remote access point is provisioned with the current provisioning parameters for the remote access point as configured by the IT administrator for the end user, so that each remote access point can have unique per-user configuration applied. US2008159536 discloses a method of transmitting changed security settings (e.g. password) to active client devices by an access point. The currently disconnected client device receive the changed security settings after trying to reconnect to the access point.

### SUMMARY

The embodiments of the present disclosure provide a method and an apparatus for providing information. The technical solutions are as follows.

According to a first aspect, the invention relates to a method for providing information, including, in a gateway:
after detecting that access authentication information is modified, automatically acquiring the modified access authentication information;
acquiring a device to be notified corresponding to the modified access authentication information; and
providing the modified access authentication information to the device to be notified, the device to be notified may re-establish a wireless network connection with the gateway device by using the modified access authentication information.

Optionally, the step of acquiring the device to be notified corresponding to the modified access authentication information comprises:
providing a first device list to a user terminal connected with the gateway, the first device list including a device identification of an access device currently connected to the gateway; and
receiving a target device identification sent by the user terminal, and determining an access device corresponding to the target device identification as the device to be notified;
wherein the target device identification is selected by the user terminal from the first device list.

Optionally, the step of providing the modified access authentication information to the device to be notified comprises:
sending the modified access authentication information to the device to be notified via a wireless network connection;
wherein the wireless network connection is established between the gateway and the device to be notified based on access authentication information before being modified.

Optionally, the method further includes, in the gateway:
receiving a receiving response sent by at least one access device, the receiving response being for indicating that the modified access authentication information has been successfully received, the at least one access device being all or part of the devices to be notified; and
determining a remaining device to be notified according to the access device sending the receiving response and the device to be notified, the remaining device to be notified referring to a device to be notified that does not successfully receive the modified access authentication information.

Optionally, the step of determining the remaining device to be notified according to the access device sending the receiving response and the device to be notified includes:
comparing a device identification of the access device sending the receiving response and a device identification of the device to be notified, and determining the remaining device to be notified;
or,
sending a second device list and a third device list to a server, the second device list including the device identification of the access device sending the receiving response, the third device list including the device identification of the device to be notified, the server being used to compare the second device list with the third device list, and determine the remaining device to be notified; and receiving a fourth device list sent by the server, the fourth device list including a device identification of the remaining device to be notified.

Optionally, the method further comprises, in the gateway:
acquiring an access request broadcasted outward by a target access device, the access request carrying a device identification of the target access device;
detecting whether the target access device belongs to the remaining device to be notified according to the device identification of the target access device; and
if the target access device belongs to the remaining device to be notified, sending the modified access authentication information to the target access device.

Optionally, the method further comprises, in the gateway :
enabling the modified access authentication information after determining that the modified access authentication information has been successfully received by all the devices to be notified;
or,
enabling the modified access authentication information at a predetermined time after sending the modified access authentication information.

According to a second aspect, the invention relates to an apparatus for providing information, the apparatus comprising:
a gateway,
wherein the gateway comprises:
   an information acquisition module configured to, after detecting that access authentication information is modified, automatically acquire the modified access authentication information;
   a device acquisition module configured to acquire a device to be notified corresponding to the modified access authentication information; and
   an information providing module configured to provide the modified access authentication information to the device to be notified, the device to be notified may re-establish a wireless network connection with the gateway device by using the modified access authentication information.

Optionally, the device acquisition module includes a list providing submodule and an identification receiving submodule;
the list providing submodule is configured to provide a first device list to a user terminal connected with the gateway, the first device list including a device identification of an access device currently connected to the gateway terminal; and
the identification receiving submodule is configured to receive a target device identification sent by the user terminal, and determine an access device corresponding to the target device identification as the device to be notified;
wherein the target device identification is selected by the user terminal from the first device list.

Optionally, the information providing module is further configured to send the modified access authentication information to the device to be notified via a wireless network connection;
wherein the wireless network connection is established between the gateway terminal and the device to be notified based on access authentication information before being modified.

Optionally, the gateway further includes:
a response receiving module configured to receive a receiving response sent by at least one access device, the receiving response being for indicating that the modified access authentication information has been successfully received, and the at least one access device being all or part of the devices to be notified; and
a remaining determination module configured to determine a remaining device to be notified according to the access device sending the receiving response and the device to be notified, the remaining device to be notified referring to a device to be notified that the modified access authentication information has not been successfully received.

Optionally, the remaining determination module is further configured to compare a device identification of the access device sending the receiving response with a device identification of the device to be notified, and determine the remaining device to be notified; or,
the remaining determination module includes a list sending submodule and a list receiving submodule;
the list sending submodule is configured to send a second device list and a third device list to a server, the second device list including the device identification of the access device sending the receiving response, the third device list including the device identification of the device to be notified, the server being used to compare the second device list with the third device list, and determine the remaining device to be notified; and
the list receiving submodule is configured to receive a fourth device list sent by the server, the fourth device list including the device identification of the remaining device to be notified.

Optionally, the gateway further includes:
a request acquisition module configured to acquire an access request broadcasted outward by a target access device, the access request carrying a device identification of the target access device;
a device detection module configured to detect whether the target access device belongs to the remaining device to be notified according to the device identification of the target access device; and
an information sending module configured to, if the target access device belongs to the remaining device to be notified, send the modified access authentication information to the target access device.

In one particular embodiment, the steps of the method for providing information are determined by computer program instructions.

Consequently, according to a third aspect, the invention is also directed to a computer program for executing the steps of a method for providing information as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects:
through acquiring the modified access authentication information and the corresponding device to be notified, and actively providing the modified access authentication information to the device to be notified, the problem in the related art that the user needs to manually provide the modified access authentication information to the access device and thus the process of acquiring the modified access device authentication information by the access device is more complex and inefficient is solved, and the effect of simply and efficiently providing the modified access authentication information to a specified access device is achieved.

It is to be understood that both the foregoing general description and the following detailed description are exemplary and explanatory only and are not restrictive of the invention. The invention is disclosed in the appended claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a view of an implementation environment involved by respective embodiments in the present disclosure;
Fig. 2 illustrates a flow chart of a method for providing information, according to an exemplary embodiment;
Fig. 3 illustrates a flow chart of a method for providing information, according to another exemplary embodiment;
Fig. 4 illustrates a flow chart of a method for providing information, according to another exemplary embodiment;
Fig. 5 illustrates a block diagram of an apparatus for providing information, according to an exemplary embodiment;
Fig. 6 illustrates a block diagram of an apparatus for providing information, according to another exemplary embodiment; and
Fig. 7 illustrates a block diagram of an apparatus, according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

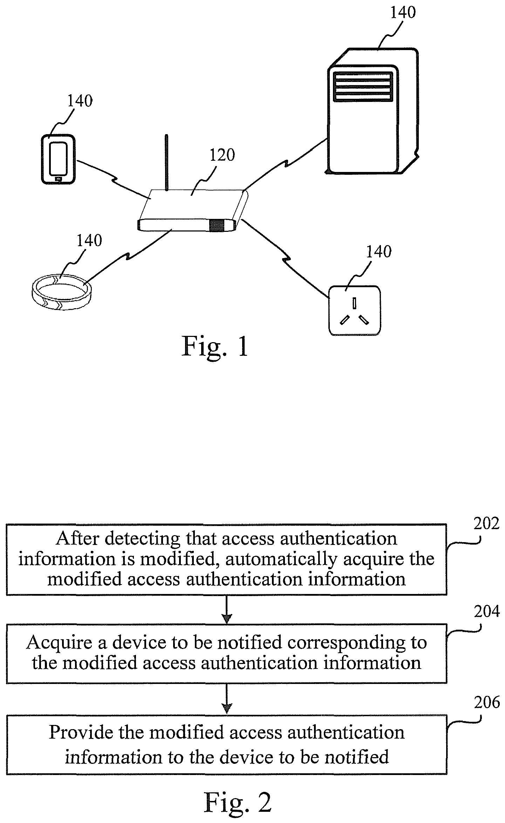

Fig. 1 is a view of an implementation environment involved by respective embodiments in the present disclosure. The implementation environment includes a gateway device 120 and at least one access device 140.

The gateway device 120 refers to a computer system or device used to provide data transformation services among multiple networks. The gateway device 120 may be a router, a switch, a firewall, or a host for turning on a routing function. In embodiments of the present disclosure, the gateway device 120 being a router is illustrated.

The access device 140 and the gateway device 120 are in the same local area network. The access device 140 may establish a wireless network connection with the gateway device 120 based on access authentication information of the gateway device 120. The wireless network connection is a Wi-Fi (Wireless Fidelity) network connection. The access authentication information typically includes a SSID and a corresponding password.

In addition, the access device 140 may be any electronic device having a wireless network access function. For example, the access device 140 may be a mobile terminal device, such as a mobile phone, a tablet, an e-book reader, and a personal digital assistant; or may be a smart household device, such as a smart plug, a smart camera, a smart TV, and a smart air conditioner; or may be a wearable device, such as a smart wristband, a smart watch, smart glasses, and a smart helmet.

Fig. 2 illustrates a flow chart of a method for providing information, according to an exemplary embodiment. The method for providing information may be applied in the gateway device 120 in the implementation environment shown in Fig. 1. The method for providing information may include the following steps.

In step 202, after detecting that access authentication information is modified, the modified access authentication information is automatically acquired.

In step 204, a device to be notified corresponding to the modified access authentication information is acquired.

In step 206, the modified access authentication information is provided to the device to be notified, the device to be notified may re-establish a wireless network connection with the gateway device by using the modified access authentication information.

In summary, in the method for providing information provided by the present embodiment, the modified access authentication information and the corresponding device to be notified are acquired, and the modified access authentication information is actively provided to the device to be notified, which solves the problem in the related art that the user needs to manually provide the modified access authentication information to the access device and thus the process of acquiring the modified access device authentication information by the access device is more complex and inefficient, and achieves the effects of simply and efficiently providing the modified access authentication information to a specified access device.

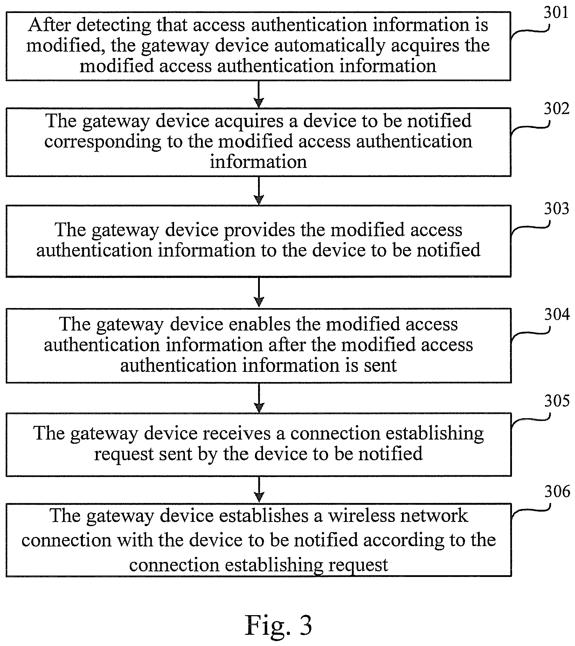

Fig. 3 illustrates a flow chart of a method for providing information, according to another exemplary embodiment. In the present embodiment, the method for providing information being applied in the gateway device 120 in the implementation environment shown in Fig. 1 is illustrated. The method for providing information may include the following steps.

In step 301, after detecting that access authentication information is modified, the gateway device automatically acquires the modified access authentication information.

The modified access authentication information includes at least one of a modified SSID and a modified password.

In one possible implementation, for example, the gateway device is taken as a router. The user may login the router through a browser or a client terminal according to a login address of the router, and then modify a SSID and/or a password of the router in the corresponding setting options. Correspondingly, the router automatically acquires the modified access authentication information after detecting that the access authentication information thereof is modified.

In step 302, the gateway device acquires a device to be notified corresponding to the modified access authentication information.

In the present embodiment, the gateway device provides the modified access authentication information to the device to be notified. The device to be notified may be automatically selected by the gateway device according to pre-configuration. For example, the device to be notified may be pre-configured as all the access devices currently connected to the gateway device. Or, the device to be notified may be selected by the user.

In one possible implementation, when the device to be notified is selected by the user, this step may include the following two substeps.

First, the gateway device provides a first device list to a user terminal connected with a local terminal (itself), wherein the first device list includes a device identification of an access device currently connected to the gateway device.

The gateway device may record the device identification of the access device currently connected with the gateway device per se, and the gateway device provides the first device list including the device identifications of all the above-mentioned access devices to the user terminal connected with the gateway device per se, and the user terminal is used to manage the access device connected with the gateway device. The device identification is used to distinguish different access devices. Optionally, the device identification may be a MAC (Media Access Control) address.

In addition, the gateway device may send the first device list to the user terminal via a Wi-Fi network connection established with the user terminal. The Wi-Fi network connection is established between the gateway device and the user terminal based on the access authentication information before being modified. Since the modified access authentication information is not put into service by the gateway device for the time being, the Wi-Fi network connection established based on the access authentication information before being modified is not interrupted, and the gateway device may still communicate with the user terminal via the Wi-Fi network connection, and send the first device list to the user terminal.

Or, the gateway device may send the first device list to the user terminal via an extended connection channel. The extended connection channel may be a wireless connection channel, or may be a wired connection channel. The wireless connection channel includes, but is not limited to, a wireless connection established based on any one of the following technologies: Bluetooth technology, ZigBee technology, UWB (Ultra Wide Band) technology, and RFID (Radio Frequency Identification) technology. The wired connection channel includes, but is not limited to, a wired connection established based on any one of the following technologies: USB (Universal Serial Bus) technology, serial port technology, and pin direct-connect technology.

Second, the gateway device receives a target device identification sent by the user terminal, and determines an access device corresponding to the target device identification as the device to be notified, wherein the target device identification is selected by the user terminal from the first device list.

After receiving the first device list sent by the gateway device, the user terminal displays the first device list. When the user determines that the modified access authentication information needs to be provided to a certain access device, the user selects the device identification corresponding to the access device from the first device list. After that, the user terminal sends the target device identification selected by the user to the gateway device. The target device identification may be one or multiple. Correspondingly, the gateway device receives the target device identification sent by the user terminal, and determines the access device corresponding to the target device identification as the device to be notified.

In other possible implementations, the gateway device may also record the device identification of the access device having established the connection with the gateway device per se. The gateway device may select the device to be notified from the above access devices having established the connection with the gateway device per se according to the pre-configuration or the selection of the user. The present embodiment is not limited thereto.

The above step 302 may be performed before step 301, or may be performed after step 301, or may be performed at the same time with step 301. The present embodiment is not limited thereto.

In step 303, the gateway device provides the modified access authentication information to the device to be notified.

The gateway device actively informs the modified access authentication information to the device to be notified, so that the device to be notified may simply and efficiently acquire the modified access authentication information. In addition, the above process of informing needs no participation by the user, eliminates the operation that the user manually provides the modified access authentication information to respective access devices, and thus improves the user experience.

Optionally, the gateway device sends the modified access authentication information to the device to be notified via the wireless network connection. The wireless network connection is established between the gateway device and the user terminal based on the access authentication information before being modified, and the wireless network connection is the Wi-Fi network connection. Since the gateway device is not yet enabled the modified access authentication information, the wireless network connection established between the gateway device and the device to be notified is not interrupted, and the gateway device may still communicate with the user terminal via the wireless network connection. The gateway device sends the modified access authentication information to respective devices to be notified respectively in the form of point-to-point transmission.

Optionally, in order to improve the security of the access authentication information, the gateway device may also encrypt the modified access authentication information before sending the modified access authentication information to the device to be notified.

In one possible implementation, the gateway device and all the access devices in the local area network appoint a same public key in advance. For example, after a wireless network connection is successfully established between respective access device and the gateway device, the gateway device sends the public key to the access devices via the wireless network connection. The gateway device uses the public key to encrypt the modified access authentication information. After that, the gateway device sends the encrypted access authentication information to the device to be notified.

In another possible implementation, the gateway device and different access devices in the local area network appoint different private keys in advance. For example, after a wireless network connection is successfully established between each access device and the gateway device, the gateway device assigns a private key to the access device, and sends the private key to the access device via the wireless network connection. Alternatively, after the wireless network connection is successfully established between each access device and the gateway device, the access device sends a private key to the gateway device via the wireless network connection. In addition, the gateway device stores a corresponding relationship between the device identifications of different access devices and different private keys. After that, for each device to be notified, before sending the modified access authentication information to the device to be notified, the gateway device encrypts the modified access authentication information by using the private key corresponding to the device to be notified according to the above corresponding relationship, and then sends the encrypted access authentication information to the device to be notified.

Correspondingly, the device to be notified receives the modified access authentication information sent by the gateway device.

In addition, when the modified access authentication information is the access authentication information encrypted by using the public key, the device to be notified uses the public key to decrypt the modified access authentication information, and reads the modified access authentication information. When the modified access authentication information is the access authentication information encrypted by using the private key, the device to be notified uses the private key to decrypt the modified access authentication information, and reads the modified access authentication information.

Optionally, the present embodiment may further include the following step 304.

In step 304, the gateway device enables the modified access authentication information after the modified access authentication information is sent.

The gateway device enables the modified access authentication information after the modified access authentication information is sent for a period of time (such as 10 seconds). Optionally, since the access authentication information of the gateway device is modified, in order to avoid a configuration error, the gateway device may trigger to restart itself, and enable the modified access authentication information after the restart is completed.

Optionally, the present embodiment may further include the following step 305 and step 306.

In step 305, the gateway device receives a connection establishing request sent by the device to be notified.

In step 306, the gateway device establishes a wireless network connection with the device to be notified according to the connection establishing request.

After receiving the modified access authentication information, the device to be notified may re-establish a wireless network connection with the gateway device by using the modified access authentication information. The process of establishing the wireless network connection can be easily thought of by a person skilled in the art, which is not elaborated herein.

In summary, in the method for providing information provided by the present embodiment, the gateway device acquires the modified access authentication information and the corresponding device to be notified, and actively provides the modified access authentication information to the device to be notified, which solves the problem in the related art that the user needs to manually provide the modified access authentication information to the access device and thus the process of acquiring the modified access device authentication information by the access device is more complex and inefficient, and achieves the effects of simply and efficiently providing the modified access authentication information to a specified access device.

In addition, before the modified access authentication information is enabled, the gateway device sends the modified access authentication information to the device to be notified based on the wireless network connection having been established, which does not need to additionally set an extended connection channel, and the modified access authentication information can be provided to the device to be notified by fully utilizing existing transmission resources.

In addition, before the modified access authentication information is sent to the device to be notified, the gateway device encrypts the modified access authentication information, and sends the encrypted access authentication information to the device to be notified, which improves the security of the access authentication information.

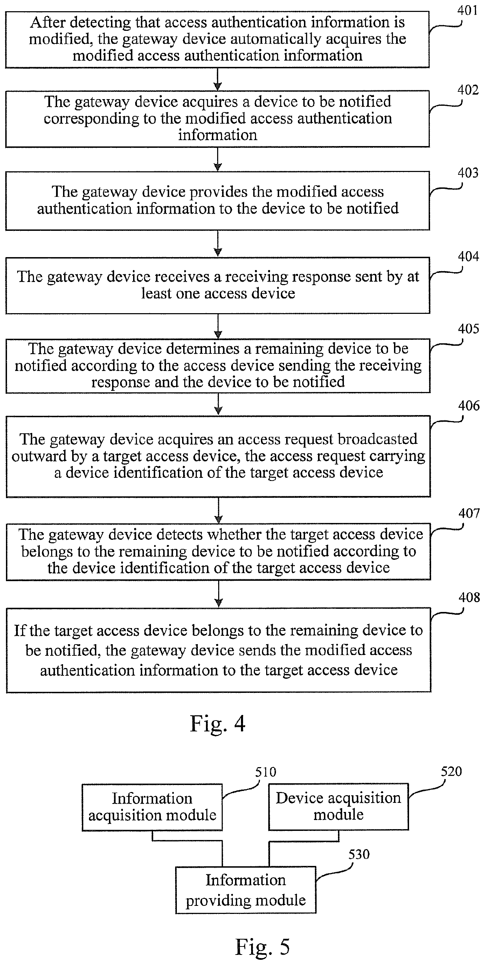

Fig. 4 illustrates a flow chart of a method for providing information, according to another exemplary embodiment. In the present embodiment, the method for providing information being applied in the gateway device 120 in the implementation environment shown in Fig. 1 is illustrated. The method for providing information may include the following steps.

In step 401, after detecting that access authentication information is modified, the gateway device automatically acquires the modified access authentication information.

In step 402, the gateway device acquires a device to be notified corresponding to the modified access authentication information.

In step 403, the gateway device provides the modified access authentication information to the device to be notified.

The above step 401 to step 403 are the same as step 301 to step 303 in the embodiment shown in Fig. 3, by referring to introductions and explanations in the embodiment shown in Fig. 3, the present embodiment does not repeat the detailed description thereof.

In the present embodiment, the method may further include the following steps.

In step 404, the gateway device receives a receiving response sent by at least one access device.

The receiving response is applied to indicate that the modified access authentication information has been successfully received. The above at least one access device is all or part of the devices to be notified.

In the present embodiment, after the modified access authentication information is successfully received, the device to be notified feeds back the receiving response carrying a device identification to the gateway device, so as to notify the gateway device that the modified access authentication information has been successfully received.

In step 405, the gateway device determines a remaining device to be notified according to the access device sending the receiving response and the device to be notified.

The remaining device to be notified refers to a device to be notified that does not successfully receive the modified access authentication information. Optionally, this step includes the following two possible implementations.

In a first possible implementation, the gateway device determines the remaining device to be notified by itself. The gateway device compares a device identification of the access device sending the receiving response with a device identification of the device to be notified, and determines the remaining devices to be notified.

For example, the devices to be notified include three access devices respectively including the device identifications 1, 2 and 3, the gateway device receives the receiving responses fed back by two access devices with the device identifications 1 and 3, and thus the gateway device may determine that the access device with the device identification 2 does not successfully receive the modified access authentication information, and the access device with the device identification 2 is the remaining device to be notified. In addition, the reason for not successfully receiving the modified access authentication information may be a power failure of the access device, a wireless network connection failure, and the like.

In a second possible implementation, the gateway device determines the remaining to be notified via a cloud server. The gateway device sends a second device list and a third device list to the server. The second device list includes the device identification of the access device sending the receiving response, and the third device list includes the device identification of the device to be notified. Correspondingly, the server is used to compare the second device list with the third device list, and determine the remaining device to be notified. After that, the gateway device receives a fourth device list sent by the server, and the fourth device list includes the device identification of the remaining device to be notified.

The gateway device determines the remaining to be notified via the cloud server, which may reduce performance requirement for the gateway device, reduce processing overhead of the gateway device, and is easy to be operated.

In addition, the timing of enabling the modified access authentication information by the gateway device may include the following two possibilities.
1. The gateway device enables the modified access authentication information after determining that the modified access authentication information has been successfully received by all the devices to be notified.
   After the receiving responses sent by all the devices to be notified are received, the gateway device then enables the modified access authentication information, so as to ensure that respective devices to be notified may quickly reconnect to the gateway device at the first time when the access authentication information is reconfigured.
2. The gateway device enables the modified access authentication information at a predetermined time after the modified access authentication information is sent.

In order to avoid the case that some devices to be notified do not feed back the receiving response for a long time and thus the modified access authentication information cannot be enabled in time, the gateway device may also enable the modified access authentication information after the modified access authentication information is sent for a period of time (such as 10 seconds).

Optionally, the present embodiment may further include the following step 406 to step 408.

In step 406, the gateway device acquires an access request broadcasted outward by a target access device, wherein the access request carries a device identification of the target access device.

For the access device that does not successfully receive the modified access authentication information, when it is found that it is unable to use the access authentication information before being modified to connect to the gateway device, the access device may broadcast the access request outside, and the access request carries the device identification of the access device per se, such as a MAC address. Correspondingly, the gateway device acquires the access request broadcasted outward by the target access device.

In step 407, the gateway device detects whether the target access device belongs to the remaining device to be notified according to the device identification of the target access device.

In step 408, if the target access device belongs to the remaining device to be notified, the gateway device sends the modified access authentication information to the target access device.

In the case that the target access device belonging to the remaining device to be notified is determined, the gateway device sends the modified access authentication information to the target access device. The gateway device may send the modified access authentication information to the target access device via broadcast. Alternatively, the gateway device may also send the modified access authentication information to the target access device via an extended connection channel established with the target access device.

In addition, the target access device may re-establish a wireless network connection with the gateway device by using the modified access authentication information after the modified access authentication information is acquired.

In summary, in the method for providing information provided by the present embodiment, the gateway device acquires the modified access authentication information and the corresponding device to be notified, and actively provides the modified access authentication information to the device to be notified, which solves the problem in the related art that the user needs to manually provide the modified access authentication information to the access device and thus the process of acquiring the modified access device authentication information by the access device is more complex and inefficient, and achieves the effects of simply and efficiently providing the modified access authentication information to a specified access device.

In addition, even if some devices to be notified do not successfully receive the modified access authentication information initially, the gateway device may also provide the modified access authentication information to the remaining device to be notified through subsequent operations, and thus ensuring that respective device to be notified may quickly and accurately re-connect to the gateway device.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

Fig. 5 illustrates a block diagram of an apparatus for providing information, according to an exemplary embodiment. The apparatus for providing information may be applied in the gateway device 120 in the implementation environment shown in Fig. 1. The apparatus for providing information may include an information acquisition module 510, a device acquisition module 520, and an information providing module 530.

The information acquisition module 510 is configured to, after detecting that access authentication information is modified, automatically acquire the modified access authentication information.

The device acquisition module 520 is configured to acquire a device to be notified corresponding to the modified access authentication information.

The information providing module 530 is configured to provide the modified access authentication information to the device to be notified.

In summary, in the apparatus for providing information provided by the present embodiment, the modified access authentication information and the corresponding device to be notified are acquired, and the modified access authentication information is actively provided to the device to be notified, which solves the problem in the related art that the user needs to manually provide the modified access authentication information to the access device and thus the process of acquiring the modified access device authentication information by the access device is more complex and inefficient, and achieves the effects of simply and efficiently providing the modified access authentication information to a specified access device.

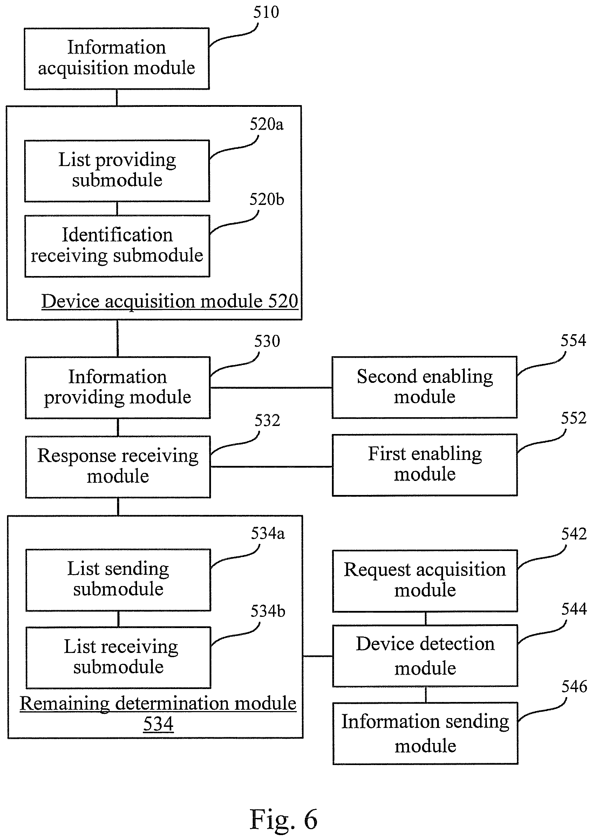

Fig. 6 illustrates a structural block diagram of an apparatus for providing information, according to another exemplary embodiment. The apparatus for providing information may be applied in the gateway device 120 in the implementation environment shown in Fig. 1. The apparatus for providing information may include an information acquisition module 510, a device acquisition module 520, and an information providing module 530.

The information acquisition module 510 is configured to, after detecting that access authentication information is modified, automatically acquire the modified access authentication information.

The device acquisition module 520 is configured to acquire a device to be notified corresponding to the modified access authentication information.

The information providing module 530 is configured to provide the modified access authentication information to the device to be notified.

Optionally, the device acquisition module 520 includes a list providing submodule 520a and an identification receiving submodule 520b.

The list providing submodule 520a is configured to provide a first device list to a user terminal connected with a terminal, wherein the first device list includes a device identification of an access device currently connected to the terminal.

The identification receiving submodule 520b is configured to receive a target device identification sent by the user terminal, and determine an access device corresponding to the target device identification as the device to be notified.

The target device identification is selected by the user terminal from the first device list.

Optionally, the information providing module 530 is further configured to send the modified access authentication information to the device to be notified via a wireless network connection.

The wireless network connection is established between the terminal and the device to be notified based on access authentication information before being modified.

Optionally, the apparatus further includes a response receiving module 532 and a remaining determination module 534.

The response receiving module 532 is configured to receive a receiving response sent by at least one access device, wherein the receiving response is applied to indicate that the modified access authentication information has been successfully received, and the at least one access device is all or part of the devices to be notified.

The remaining determination module 534 is configured to determine a remaining device to be notified according to the access device sending the receiving response and the device to be notified, wherein the remaining device to be notified refers to a device to be notified that does not successfully receive the modified access authentication information.

Optionally, the remaining determination module 534 is further configured to compare a device identification of the access device sending the receiving response with a device identification of the device to be notified, and determine the remaining device to be notified.

Or, the remaining determination module 534 includes a list sending submodule 534a and a list receiving submodule 534b.

The list sending submodule 534a is configured to send a second device list and a third device list to a server, wherein the second device list includes the device identification of the access device sending the receiving response, the third device list includes the device identification of the device to be notified, and the server is used to compare the second device list with the third device list, and determine the remaining device to be notified.

The list receiving submodule 534b is configured to receive a fourth device list sent by the server, wherein the fourth device list includes the device identification of the remaining device to be notified.

Optionally, the apparatus further include a request acquisition module 542, a device detection module 544, and an information sending module 546.

The request acquisition module 542 is configured to acquire an access request broadcasted outward by a target access device, wherein the access request carries a device identification of the target access device.

The device detection module 544 is configured to detect whether the target access device belongs to the remaining device to be notified according to the device identification of the target access device.

The information sending module 546 is configured to, if the target access device belongs to the remaining device to be notified, send the modified access authentication information to the target access device.

Optionally, the apparatus further include a first enabling module 552, or a second enabling module 554.

The first enabling module 552 is configured to enable the modified access authentication information after determining that the modified access authentication information has been successfully received by all the devices to be notified.

The second enabling module 554 is configured to enable the modified access authentication information at a predetermined time after the modified access authentication information is sent.

In summary, in the apparatus for providing information provided by the present embodiment, the modified access authentication information and the corresponding device to be notified are acquired, and the modified access authentication information is actively provided to the device to be notified, which solves the problem in the related art that the user needs to manually provide the modified access authentication information to the access device and thus the process of acquiring the modified access device authentication information by the access device is more complex and inefficient, and achieves the effects of simply and efficiently providing the modified access authentication information to a specified access device.

In addition, before the modified access authentication information is enabled, the modified access authentication information is sent to the device to be notified based on the wireless network connection having been established, which does not need to additionally set the extended connection channel, and achieves that the modified access authentication information is provided to the device to be notified by fully utilizing existing transmission resources.

In addition, even if some devices to be notified do not successfully receive the modified access authentication information initially, the modified access authentication information may also be provided to the remaining device to be notified through subsequent operations, and thus ensuring that respective device to be notified may quickly and accurately re-connect to the gateway device.

With respect to the devices in the above embodiments, the specific manners for performing operations for individual modules therein have been described in detail in the embodiments regarding the related methods, which will not be elaborated herein.

An exemplary embodiment of the present disclosure provides an apparatus for providing information, which may achieve the method for providing information provided by the present disclosure. The apparatus for providing information includes a processor and a memory for storing instructions executable by the processor.

The processor is configured to:
after detecting that access authentication information is modified, automatically acquire the modified access authentication information;
acquire a device to be notified corresponding to the modified access authentication information; and
provide the modified access authentication information to the device to be notified.

Optionally, the processor is further configured to:
provide a first device list to a user terminal connected with a terminal, wherein the first device list includes a device identification of an access device currently connected to the terminal; and
receive a target device identification sent by the user terminal, and determine an access device corresponding to the target device identification as the device to be notified;
wherein the target device identification is selected by the user terminal from the first device list.

Optionally, the processor is further configured to:
send the modified access authentication information to the device to be notified via a wireless network connection;
wherein the wireless network connection is established between the terminal and the device to be notified based on access authentication information before being modified.

Optionally, the processor is further configured to:
receive a receiving response sent by at least one access device, wherein the receiving response is applied to indicate that the modified access authentication information has been successfully received, and the at least one access device is all or part of the devices to be notified; and
determine a remaining device to be notified according to the access device sending the receiving response and the device to be notified, wherein the remaining device to be notified refers to a device to be notified that does not successfully receive the modified access authentication information.

Optionally, the processor is further configured to:
compare a device identification of the access device sending the receiving response with a device identification of the device to be notified, and determine the remaining device to be notified;
or,
send a second device list and a third device list to a server, wherein the second device list includes the device identification of the access device sending the receiving response, the third device list includes the device identification of the device to be notified, and the server is used to compare the second device list with the third device list, and determine the remaining device to be notified; and receiving a fourth device list sent by the server, wherein the fourth device list includes the device identification of the remaining device to be notified.

Optionally, the processor is further configured to:
acquire an access request broadcasted outward by a target access device, wherein the access request carries a device identification of the target access device;
detect whether the target access device belongs to the remaining device to be notified according to the device identification of the target access device; and
if the target access device belongs to the remaining device to be notified, send the modified access authentication information to the target access device.

Optionally, the processor is further configured to:
enable the modified access authentication information after determining that the modified access authentication information has been successfully received by all the devices to be notified;
or,
enable the modified access authentication information at a predetermined time after the modified access authentication information is sent.

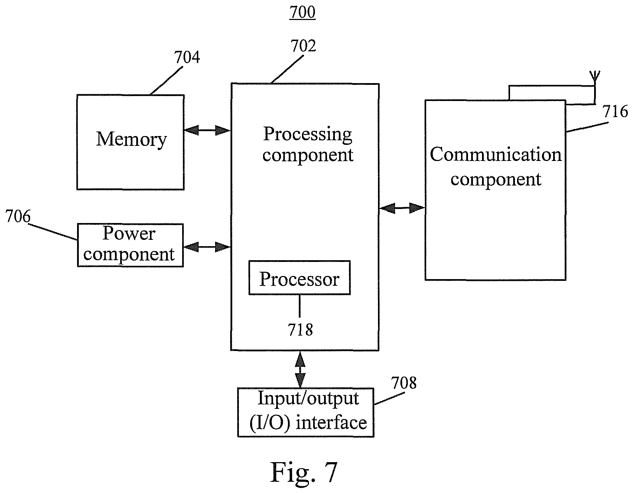

Fig. 7 is a block diagram of a device 700, according to an exemplary embodiment. For example, the device 700 may be a router.

Referring to Fig. 7, the device 700 may include one or more of the following components: a processing component 702, a memory 704, a power component 706, an input/output (I/O) interface 708, and a communication component 716.

The processing component 702 typically controls overall operations of the device 700, such as address resolution, data sending and receiving, and traffic control. The processing component 702 may include one or more processors 718 to execute instructions to perform all or part of the steps in the above described methods. Moreover, the processing component 702 may include one or more modules which facilitate the interaction between the processing component 702 and other components.

The memory 704 is configured to store various types of data to support the operation of the device 700. Examples of such data include instructions for any applications or methods operated on the device 700, user data, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The I/O interface 708 provides an interface between the processing component 702 and peripheral interface modules.

The communication component 716 is configured to facilitate communication, wired or wirelessly, between the device 700 and other devices. The device 700 can establish a wireless network based on a communication standard, such as WiFi. In one exemplary embodiment, the communication component 716 sends a broadcast signal or broadcast associated information to an external system via a broadcast channel.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 704, executable by the processor 718 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided. When the instructions in the storage medium is performed by the processor 718 of the device 700, the device 700 can perform the method for providing information in the embodiments shown in Fig. 2, Fig. 3 or Fig. 4.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for providing information, the method comprising:
in a gateway device:
after detecting that access authentication information, for establishing a connection to said gateway by a device to be notified, is modified, automatically acquiring (202, 301, 401) the modified access authentication information;
acquiring (204, 302, 402) the device to be notified corresponding to the modified access authentication information; and
providing (206, 303, 403) the modified access authentication information to the device to be notified, so that the device to be notified may re-establish a wireless network connection with the gateway device by using the modified access authentication information;
the method being **characterized in that**, the step of acquiring (204) the device to be notified corresponding to the modified access authentication information comprises:
providing a first device list to a user terminal connected with the gateway, the first device list containing a device identification of an access device having established the connection with the gateway; and
receiving a target device identification sent by the user terminal, and determining an access device corresponding to the target device identification as the device to be notified,
wherein the target device identification is selected by the user terminal from the first device list.

2. The method according to claim 1, **characterized in that**, the step of providing (206) the modified access authentication information to the device to be notified comprises:
sending the modified access authentication information to the device to be notified via a wireless network connection,
wherein the wireless network connection is established between the gateway and the device to be notified based on access authentication information before being modified.

3. The method according to claim 1, **characterized in that**, the method further comprises:
in the gateway:
receiving (404) a receiving response sent by at least one access device, the receiving response indicating that the modified access authentication information has been successfully received, and the at least one access device being all or part of the devices to be notified; and
determining (405) a remaining device to be notified according to the access device sending the receiving response and the device to be notified, the remaining device to be notified referring to a device to be notified that does not successfully receive the modified access authentication information.

4. The method according to claim 3, **characterized in that**, the determining (405) the remaining device to be notified according to the access device sending the receiving response and the device to be notified comprises:
comparing a device identification of the access device sending the receiving response and a device identification of the device to be notified, and determining the remaining device to be notified;
or,
sending a second device list and a third device list to a server, the second device list containing the device identification of the access device sending the receiving response, the third device list containing the device identification of the device to be notified, and the server being used to compare the second device list with the third device list, and determine the remaining device to be notified; and receiving a fourth device list sent by the server, the fourth device list containing the device identification of the remaining device to be notified.

5. The method according to claim 3, **characterized in that**, the method further comprises:
in the gateway:
acquiring (406) an access request broadcasted outward by a target access device, the access request carrying a device identification of the target access device;
detecting (407) whether the target access device belongs to the remaining device to be notified according to the device identification of the target access device; and
if the target access device belongs to the remaining device to be notified, sending (408) the modified access authentication information to the target access device.

6. The method according to any one of claims 1-5, **characterized in that**, the method further comprises:
in the gateway:
enabling the modified access authentication information after determining that the modified access authentication information has been successfully received by all the devices to be notified;
or,
enabling the modified access authentication information at a predetermined time after sending the modified access authentication information.

7. An apparatus for providing information, the apparatus comprising:
a gateway comprising:
an information acquisition module (510) configured to, after detecting that access authentication information, for establishing a connection to said gateway by a device to be notified, is modified, automatically acquire the modified access authentication information;
a device acquisition module (520) configured to acquire the device to be notified corresponding to the modified access authentication information; and
an information providing module (530) configured to provide the modified access authentication information to the device to be notified, so that the device to be notified may re-establish a wireless network connection with the gateway device by using the modified access authentication information;
the apparatus being **characterized in that**, the device acquisition module (520) comprises: a list providing submodule (520a) and an identification receiving submodule (520b);
the list providing submodule (520a) is configured to provide a first device list to a user terminal connected with the gateway, the first device list containing a device identification of an access device having established the connection with the gateway; and
the identification receiving submodule(520b) is configured to receive a target device identification sent by the user terminal, and determine an access device corresponding to the target device identification as the device to be notified,
wherein the target device identification is selected by the user terminal from the first device list.

8. The apparatus according to claim 7, **characterized in that**,
the information providing module (530) is further configured to send the modified access authentication information to the device to be notified via a wireless network connection,
wherein the wireless network connection is established between the gateway and the device to be notified based on access authentication information before being modified.

9. The apparatus according to claim 7, **characterized in that**, the gateway further comprises:
a response receiving module (532) configured to receive a receiving response sent by at least one access device, the receiving response indicating that the modified access authentication information has been successfully received, and the at least one access device being all or part of the devices to be notified; and
a remaining determination module (534) configured to determine a remaining device to be notified according to the access device sending the receiving response and the device to be notified, the remaining device to be notified referring to a device to be notified that does not successfully receive the modified access authentication information.

10. The apparatus according to claim 9, **characterized in that**,
the remaining determination module (534) is further configured to compare a device identification of the access device sending the receiving response with a device identification of the device to be notified, and determine the remaining device to be notified;
or,
the remaining determination module comprises: a list sending submodule (534a) and a list receiving submodule (534b),
the list sending submodule (534a) is configured to send a second device list and a third device list to a server, the second device list containing the device identification of the access device sending the receiving response, the third device list containing the device identification of the device to be notified, and the server being used to compare the second device list with the third device list, and determine the remaining device to be notified; and
the list receiving submodule (534b) is configured to receive a fourth device list sent by the server, the fourth device list containing the device identification of the remaining device to be notified.

11. The apparatus according to claim 9, **characterized in that**, the gateway further comprises:
a request acquisition module (542) configured to acquire an access request broadcasted outward by a target access device, the access request carrying a device identification of the target access device;
a device detection module (544) configured to detect whether the target access device belongs to the remaining device to be notified according to the device identification of the target access device; and
an information sending module (546) configured to, if the target access device belongs to the remaining device to be notified, send the modified access authentication information to the target access device.

12. A computer program including instructions for executing the steps of a method for providing information according to any one of claims 1 to 6 when said program is executed by a computer of the gateway device.

13. A recording medium readable by a computer of the gateway device and having recorded thereon a computer program including instructions for executing the steps of a method for providing information according to any one of claims 1 to 6.

## Patentansprüche

1. Verfahren zum Bereitstellen von Informationen, wobei das Verfahren umfasst:
in einem Gateway-Gerät:
nach dem Erkennen, dass zum Aufbau einer Verbindung zu dem genannten Gateway durch ein zu benachrichtigendes Gerät dienende Zugangsauthentifizierungsinformationen geändert werden, automatisches Erfassen (202, 301, 401) der geänderten Zugangsauthentifizierungsinformationen,
Erfassen (204, 302, 402) des zu benachrichtigenden Geräts entsprechend den geänderten Zugangsauthentifizierungsinformationen und
Bereitstellen (206, 303, 403) der geänderten Zugangsauthentifizierungsinformationen an das zu benachrichtigende Gerät, so dass das zu benachrichtigende Gerät unter Verwendung der geänderten Zugangsauthentifizierungsinformationen wieder eine drahtlose Netzverbindung mit dem Gateway-Gerät herstellen kann;
wobei das Verfahrens **dadurch gekennzeichnet, dass** der Schritt (204) des Erfassens der zu benachrichtigenden Gerät entsprechend der geänderten Zugangsauthentifizierungsinformationen umfasst:
Bereitstellen einer ersten Geräteliste an ein Benutzerendgerät, das mit dem Gateway verbunden ist, wobei die erste Geräteliste eine Gerätekennung eines Zugangsgerätes enthält, das die Verbindung mit dem Gateway hergestellt hat, und
Empfangen einer vom Benutzerendgerät gesendeten Zielgerätekennung und Bestimmen eines der Zielgerätekennung entsprechenden Zugangsgeräts als das zu benachrichtigende Gerät,
wobei die Zielgerätekennung von dem Benutzerendgerät aus der ersten Geräteliste ausgewählt wird.

2. Verfahren nach Anspruch 1, **dadurch gekennzeichnet, dass** der Schritt des Bereitstellens (206) der modifizierten Zugangsauthentifizierungsinformationen an das zu benachrichtigende Gerät umfasst:
Senden der geänderten Zugangsauthentifizierungsinformationen an das zu benachrichtigende Gerät über eine drahtlose Netzverbindung,
wobei die drahtlose Netzverbindung zwischen dem Gateway und dem zu benachrichtigenden Gerät auf der Grundlage von Zugangsauthentifizierungsinformationen vor deren Änderung hergestellt wird.

3. Verfahren nach Anspruch 1, **dadurch gekennzeichnet, dass** das Verfahren ferner umfasst:
in dem Gateway:
Empfangen (404) einer von mindestens einem Zugangsgerät gesendeten Empfangsantwort, wobei die Empfangsantwort angibt, dass die geänderten Zugangsauthentifizierungsinformationen erfolgreich empfangen wurden, und wobei das mindestens eine Zugangsgerät alle oder ein Teil der zu benachrichtigenden Geräte ist, und
Bestimmen (405) eines verbleibenden zu benachrichtigenden Geräts entsprechend dem Zugangsgerät, das die Empfangsantwort sendet, und dem zu benachrichtigenden Gerät, wobei sich das verbleibende zu benachrichtigende Gerät auf ein zu benachrichtigendes Gerät bezieht, das die geänderten Zugangsauthentifizierungsinformationen nicht erfolgreich empfängt.

4. Verfahren nach Anspruch 3, **dadurch gekennzeichnet, dass** das Bestimmen (405) des verbleibenden zu benachrichtigenden Geräts gemäß dem Zugangsgerät, das die Empfangsantwort sendet, und des zu benachrichtigenden Geräts umfasst:
Vergleich einer Gerätekennung des Zugangsgeräts, das die Empfangsantwort sendet, mit einer Gerätekennung des zu benachrichtigenden Geräts und Bestimmen des verbleibenden zu benachrichtigenden Geräts
oder
Senden einer zweiten Geräteliste und einer dritten Geräteliste an einen Server, wobei die zweite Geräteliste die Gerätekennung des Zugangsgeräts enthält, das die Empfangsantwort sendet, die dritte Geräteliste die Gerätekennung des zu benachrichtigenden Geräts enthält und der Server verwendet wird, um die zweite Geräteliste mit der dritten Geräteliste zu vergleichen und das verbleibende zu benachrichtigende Gerät zu bestimmen; und Empfangen einer vom Server gesendeten vierten Geräteliste, wobei die vierte Geräteliste die Gerätekennung des verbleibenden zu benachrichtigenden Geräts enthält.

5. Verfahren nach Anspruch 3, **dadurch gekennzeichnet, dass** das Verfahren ferner umfasst:
in dem Gateway:
Erfassen (406) einer Zugangsanforderung, die von einem Zielzugangsgerät nach außen gesendet wird, wobei die Zugangsanforderung eine Gerätekennung des Zielzugangsgeräts trägt,
Erkennen (407), ob das Zielzugangsgerät gemäß der Gerätekennung des Zielzugangsgeräts zu dem verbleibenden zu benachrichtigenden Gerät gehört und
wenn das Zielzugangsgerät zu dem verbleibenden zu benachrichtigenden Gerät gehört, Senden (408) der geänderten Zugangsauthentifizierungsinformationen an das Zielzugangsgerät.

6. Verfahren nach einem der Ansprüche 1 - 5, **dadurch gekennzeichnet, dass** das Verfahren ferner umfasst:
in dem Gateway:
Aktivieren der geänderten Zugangsauthentifizierungsinformationen, nachdem erkannt wurde, dass die geänderten Zugangsauthentifizierungsinformationen von allen zu benachrichtigenden Geräten erfolgreich empfangen wurden,
oder
Aktivieren der modifizierten Zugangsauthentifizierungsinformationen zu einer vorbestimmten Zeit nach dem Senden der modifizierten Zugangsauthentifizierungsi nformationen.

7. Vorrichtung zum Bereitstellen von Informationen, wobei die Vorrichtung umfasst:
ein Gateway umfassend:
ein Informationserfassungsmodul (510), das dazu konfiguriert ist, nachdem erkannt wurde, dass zum Herstellen einer Verbindung zu dem genannten Gateway durch ein zu benachrichtigendes Gerät dienende Zugangsauthentifizierungsinformationen modifiziert werden, die modifizierten Zugangsauthentifizierungsinformationen automatisch zu erfassen,
ein Geräteerfassungsmodul (520), das dazu konfiguriert ist, das zu benachrichtigende Gerät entsprechend der geänderten Zugangsauthentifizierungsinformationen zu erfassen, und
ein Informationsbereitstellungsmodul (530), das dazu konfiguriert ist, dem zu benachrichtigenden Gerät die geänderten Zugangsauthentifizierungsinformationen bereitzustellen, so dass das zu benachrichtigende Gerät unter Verwendung der geänderten Zugangsauthentifizierungsinformationen eine drahtlose Netzverbindung mit dem Gateway-Gerät wieder herstellen kann;
wobei die Vorrichtung **dadurch gekennzeichnet ist, dass** das Geräteerfassungsmodul (520) umfasst: ein Listenbereitstellungs-Untermodul (520a) und ein Kennungsempfangs-Untermodul (520b);
das Listenbereitstellungs-Untermodul (520a) dazu konfiguriert ist, eine erste Geräteliste für ein mit dem Gateway verbundenes Benutzerendgerät bereitzustellen, wobei die erste Geräteliste eine Gerätkennung eines Zugangsgerätes enthält, das die Verbindung mit dem Gateway hergestellt hat,
und
das Kennungsempfangs-Untermodul (520b) dazu konfiguriert ist, eine vom Benutzerendgerät gesendete Zielgerätekennung zu empfangen und ein der Zielgerätekennung entsprechendes Zugangsgerät als das zu benachrichtigende Gerät zu bestimmen,
wobei die Zielgerätekennung von dem Benutzerendgerät aus der ersten Geräteliste ausgewählt wird.

8. Vorrichtung nach Anspruch 7, **dadurch gekennzeichnet, dass**,
das Informationsbereitstellungsmodul (530) ferner so konfiguriert ist, dass es die geänderten Zugangsauthentifizierungsinformationen über eine drahtlose Netzverbindung an das zu benachrichtigende Gerät sendet,
wobei die drahtlose Netzverbindung zwischen dem Gateway und dem zu benachrichtigenden Gerät auf der Grundlage von Zugangsauthentifizierungsinformationen vor deren Änderung hergestellt wird.

9. Vorrichtung nach Anspruch 7, **dadurch gekennzeichnet, dass** der Gateway ferner umfasst:
ein Antwort-Empfangsmodul (532), das dazu konfiguriert ist, eine Empfangsantwort zu empfangen, die von mindestens einem Zugangsgerät gesendet wird, wobei die Empfangsantwort anzeigt, dass die modifizierten Zugangsauthentifizierungsinformationen erfolgreich empfangen wurde, und wobei das mindestens eine Zugangsgerät alle oder ein Teil der zu benachrichtigenden Geräte ist, und
ein Restbestimmungsmodul (534), das dazu konfiguriert ist, ein verbleibendes zu benachrichtigendes Gerät gemäß dem Zugangsgerät, das die Empfangsantwort sendet, und dem zu benachrichtigenden Gerät bestimmt, wobei sich das verbleibende zu benachrichtigende Gerät auf ein zu benachrichtigendes Gerät bezieht, das die geänderten Zugangsauthentifizierungsinformationen nicht erfolgreich empfängt.

10. Vorrichtung nach Anspruch 9, **dadurch gekennzeichnet, dass**
das Restbestimmungsmodul (534) ferner dazu konfiguriert ist, eine Gerätekennung des Zugangsgeräts, das die Empfangsantwort sendet, mit einer Gerätekennung des zu benachrichtigenden Geräts zu vergleichen und das verbleibende zu benachrichtigende Gerät zu bestimmen,
oder
das verbleibende Bestimmungsmodul Listensende-Untermodul (534a) und ein Listenempfangs-Untermodul (534b),
wobei das Listensende-Untermodul (534a) dazu konfiguriert ist, eine zweite Geräteliste und eine dritte Geräteliste an einen Server zu senden, wobei die zweite Geräteliste die Gerätekennung des Zugangsgeräts enthält, das die Empfangsantwort sendet, die dritte Geräteliste die Gerätekennung des zu benachrichtigenden Geräts enthält und der Server dazu verwendet wird, die zweite Geräteliste mit der dritten Geräteliste zu vergleichen und das verbleibende zu benachrichtigende Gerät zu bestimmen, und
wobei das Listenempfangs-Untermodul (534b) dazu konfiguriert ist, eine vom Server gesendete vierte Geräteliste zu empfangen, wobei die vierte Geräteliste die Gerätekennung des verbleibenden zu benachrichtigenden Geräts enthält.

11. Vorrichtung nach Anspruch 9, **dadurch gekennzeichnet, dass** das Gateway ferner umfasst:
ein Anforderungserfassungsmodul (542), das dazu konfiguriert ist, eine Zugangsanforderung zu erfassen, die von einem Zielzugangsgerät nach außen gesendet wird, wobei die Zugangsanforderung eine Gerätekennung des Zielzugangsgeräts trägt,
ein Geräteerkennungsmodul (544), das dazu konfiguriert ist, entsprechend der Gerätekennung des Zielzugangsgeräts zu erkennen, ob das Zielzugangsgerät zu dem verbleibenden zu benachrichtigenden Gerät gehört, und
ein Informationssendemodul (546), das dazu konfiguriert ist, dass es, wenn das Zielzugangsgerät zu dem verbleibenden zu benachrichtigenden Gerät gehört, die geänderten Zugangsauthentifizierungsinformationen an das Zielzugangsgerät sendet.

12. Computerprogramm mit Befehlen zum Ausführen der Schritte eines Verfahrens zur Bereitstellung von Informationen nach einem der Ansprüche 1 bis 6, wenn das Programm von einem Computer des Gateway-Geräts ausgeführt wird.

13. Aufzeichnungsmedium, das von einem Computer des Gateway-Geräts gelesen werden kann und auf dem ein Computerprogramm aufgezeichnet ist, das Anweisungen zur Ausführung der Schritte eines Verfahrens zur Bereitstellung von Informationen nach einem der Ansprüche 1 bis 6 enthält.

## Revendications

1. Procédé de fourniture d'informations, le procédé comprenant les étapes ci-dessous consistant à :
dans un dispositif de passerelle :
après avoir détecté que des informations d'authentification d'accès, pour établir une connexion à ladite passerelle par un dispositif devant être notifié, sont modifiées, acquérir automatiquement (202, 301, 401) les informations d'authentification d'accès modifiées ;
acquérir (204, 302, 402) le dispositif devant être notifié correspondant aux informations d'authentification d'accès modifiées ; et
fournir (206, 303, 403) les informations d'authentification d'accès modifiées au dispositif devant être notifié, de sorte que le dispositif devant être notifié peut rétablir une connexion réseau sans fil avec le dispositif de passerelle en utilisant les informations d'authentification d'accès modifiées ;
le procédé étant **caractérisé en ce que** l'étape d'acquisition (204) du dispositif devant être notifié correspondant aux informations d'authentification d'accès modifiées comprend les étapes ci-dessous consistant à :
fournir une première liste de dispositifs à un terminal d'utilisateur connecté à la passerelle, la première liste de dispositifs contenant une identification de dispositif d'un dispositif d'accès ayant établi la connexion avec la passerelle ; et
recevoir une identification de dispositif cible envoyée par le terminal d'utilisateur, et déterminer un dispositif d'accès correspondant à l'identification de dispositif cible comme étant le dispositif devant être notifié ;
dans lequel l'identification de dispositif cible est sélectionnée par le terminal d'utilisateur à partir de la première liste de dispositifs.

2. Procédé selon la revendication 1, **caractérisé en ce que**, l'étape de fourniture (206) des informations d'authentification d'accès modifiées au dispositif devant être notifié comprend l'étape ci-dessous consistant à :
envoyer les informations d'authentification d'accès modifiées au dispositif devant être notifié, par l'intermédiaire d'une connexion réseau sans fil ;
dans lequel la connexion réseau sans fil est établie entre la passerelle et le dispositif devant être notifié sur la base d'informations d'authentification d'accès avant que celles-ci ne soient modifiées.

3. Procédé selon la revendication 1, **caractérisé en ce que**, le procédé comprend en outre les étapes ci-dessous consistant à :
dans la passerelle :
recevoir (404) une réponse de réception envoyée par au moins un dispositif d'accès, la réponse de réception indiquant que les informations d'authentification d'accès modifiées ont été correctement reçues, et ledit au moins un dispositif d'accès correspondant à tout ou partie des dispositifs devant être notifiés ; et
déterminer (405) un dispositif restant devant être notifié selon le dispositif d'accès envoyant la réponse de réception et le dispositif devant être notifié, le dispositif restant devant être notifié faisant référence à un dispositif devant être notifié qui ne reçoit pas correctement les informations d'authentification d'accès modifiées.

4. Procédé selon la revendication 3, **caractérisé en ce que** l'étape de détermination (405) du dispositif restant devant être notifié selon le dispositif d'accès envoyant la réponse de réception et le dispositif devant être notifié comprend les étapes ci-dessous consistant à :
comparer une identification de dispositif du dispositif d'accès envoyant la réponse de réception et une identification de dispositif du dispositif devant être notifié, et déterminer le dispositif restant devant être notifié ; ou
envoyer une deuxième liste de dispositifs et une troisième liste de dispositifs, à un serveur, la deuxième liste de dispositifs contenant l'identification de dispositif du dispositif d'accès envoyant la réponse de réception, la troisième liste de dispositifs contenant l'identification de dispositif du dispositif devant être notifié, et le serveur étant utilisé en vue de comparer la deuxième liste de dispositifs à la troisième liste de dispositifs, et de déterminer le dispositif restant devant être notifié ; et recevoir une quatrième liste de dispositifs envoyée par le serveur, la quatrième liste de dispositifs contenant l'identification de dispositif du dispositif restant devant être notifié.

5. Procédé selon la revendication 3, **caractérisé en ce que** le procédé comprend en outre les étapes ci-dessous consistant à :
dans la passerelle :
acquérir (406) une demande d'accès diffusée vers l'extérieur par un dispositif d'accès cible, la demande d'accès portant une identification de dispositif du dispositif d'accès cible ;
détecter (407) si le dispositif d'accès cible appartient au dispositif restant devant être notifié selon l'identification de dispositif du dispositif d'accès cible ; et
si le dispositif d'accès cible appartient au dispositif restant devant être notifié, envoyer (408) les informations d'authentification d'accès modifiées au dispositif d'accès cible.

6. Procédé selon l'une quelconque des revendications 1 à 5, **caractérisé en ce que** le procédé comprend en outre les étapes ci-dessous consistant à :
dans la passerelle :
activer les informations d'authentification d'accès modifiées après avoir déterminé que les informations d'authentification d'accès modifiées ont été correctement reçues par tous les dispositifs devant être notifiés ; ou
activer les informations d'authentification d'accès modifiées, à un instant prédéterminé, après l'envoi des informations d'authentification d'accès modifiées.

7. Appareil destiné à fournir des informations, l'appareil comprenant :
une passerelle comprenant :
un module d'acquisition d'informations (510) configuré de manière à, après avoir détecté que des informations d'authentification d'accès, pour établir une connexion à ladite passerelle par un dispositif devant être notifié, sont modifiées, acquérir automatiquement les informations d'authentification d'accès modifiées ;
un module d'acquisition de dispositif (520) configuré de manière à acquérir le dispositif devant être notifié correspondant aux informations d'authentification d'accès modifiées ; et
un module de fourniture d'informations (530) configuré de manière à fournir les informations d'authentification d'accès modifiées, au dispositif devant être notifié, de sorte que le dispositif devant être notifié peut rétablir une connexion réseau sans fil avec le dispositif de passerelle, en utilisant les informations d'authentification d'accès modifiées ;
l'appareil étant **caractérisé en ce que** le module d'acquisition de dispositif (520) comprend : un sous-module de fourniture de listes (520a) et un sous-module de réception d'identification (520b) ;
le sous-module de fourniture de listes (520a) est configuré de manière à fournir une première liste de dispositifs à un terminal d'utilisateur connecté à la passerelle, la première liste de dispositifs contenant une identification d'un dispositif d'accès ayant établi la connexion avec la passerelle ; et
le sous-module de réception d'identification (520b) est configuré de manière à recevoir une identification de dispositif cible envoyée par le terminal d'utilisateur, et à déterminer un dispositif d'accès correspondant à l'identification de dispositif cible comme étant le dispositif devant être notifié ;
dans lequel l'identification de dispositif cible est sélectionnée par le terminal d'utilisateur à partir de la première liste de dispositifs.

8. Appareil selon la revendication 7, **caractérisé en ce que**,
le module de fourniture d'informations (530) est en outre configuré de manière à envoyer les informations d'authentification d'accès modifiées, au dispositif devant être notifié, par l'intermédiaire d'une connexion réseau sans fil ;
dans lequel la connexion réseau sans fil est établie entre la passerelle et le dispositif devant être notifié, sur la base d'informations d'authentification d'accès avant que celles-ci ne soient modifiées.

9. Appareil selon la revendication 7, **caractérisé en ce que** la passerelle comprend en outre :
un module de réception de réponse (532) configuré de manière à recevoir une réponse de réception envoyée par au moins un dispositif d'accès, la réponse de réception indiquant que les informations d'authentification d'accès modifiées ont été correctement reçues, et ledit au moins un dispositif d'accès correspondant à tout ou partie des dispositifs devant être notifiés ; et
un module de détermination de dispositif restant (534) configuré de manière à déterminer un dispositif restant devant être notifié selon le dispositif d'accès envoyant la réponse de réception et le dispositif devant être notifié, le dispositif restant devant être notifié faisant référence à un dispositif devant être notifié qui ne reçoit pas correctement les informations d'authentification d'accès modifiées.

10. Appareil selon la revendication 9, **caractérisé en ce que**,
le module de détermination de dispositif restant (534) est en outre configuré de manière à comparer une identification de dispositif du dispositif d'accès envoyant la réponse de réception à une identification de dispositif du dispositif devant être notifié, et à déterminer le dispositif restant devant être notifié ; ou
le module de détermination de dispositif restant comprend : un sous-module d'envoi de listes (534a) et un sous-module de réception de listes (534b) ;
le sous-module d'envoi de listes (534a) est configuré de manière à envoyer une deuxième liste de dispositifs et une troisième liste de dispositifs, à un serveur, la deuxième liste de dispositifs contenant l'identification de dispositif du dispositif d'accès envoyant la réponse de réception, la troisième liste de dispositifs contenant l'identification de dispositif du dispositif devant être notifié, et le serveur étant utilisé en vue de comparer la deuxième liste de dispositifs à la troisième liste de dispositifs, et de déterminer le dispositif restant devant être notifié ; et
le sous-module de réception de listes (534b) est configuré de manière à recevoir une quatrième liste de dispositifs envoyée par le serveur, la quatrième liste de dispositifs contenant l'identification de dispositif du dispositif restant devant être notifié.

11. Appareil selon la revendication 9, **caractérisé en ce que** la passerelle comprend en outre :
un module d'acquisition de demande (542) configuré de manière à acquérir une demande d'accès diffusée vers l'extérieur par un dispositif d'accès cible, la demande d'accès portant une identification de dispositif du dispositif d'accès cible ;
un module de détection de dispositif (544) configuré de manière à détecter si le dispositif d'accès cible appartient au dispositif restant devant être notifié selon l'identification de dispositif du dispositif d'accès cible ; et
un module d'envoi d'informations (546) configuré de manière à, si le dispositif d'accès cible appartient au dispositif restant devant être notifié, envoyer les informations d'authentification d'accès modifiées au dispositif d'accès cible.

12. Programme informatique incluant des instructions pour exécuter les étapes d'un procédé de fourniture d'informations selon l'une quelconque des revendications 1 à 6, lorsque ledit programme est exécuté par un ordinateur du dispositif de passerelle.

13. Support d'enregistrement lisible par un ordinateur du dispositif de passerelle et sur lequel est enregistré un programme informatique incluant des instructions pour exécuter les étapes d'un procédé de fourniture d'informations selon l'une quelconque des revendications 1 à 6.
